# EUROPÄISCHE PATENTSCHRIFT

(11) **EP 1 602 836 B1**
(45) Veröffentlichungstag und Bekanntmachung des Hinweises auf die Patenterteilung: **21.01.2009**
(21) Anmeldenummer: 04405347.8
(22) Anmeldetag: 04.06.2004
(51) Int. Cl.: F16B 2/14, F16B 12/12, B27M 3/00

(54) **Gratleiste für Massivholz**
Stiffening ridge for solid wood
Nervure raidisseuse pour bois massif

(43) Veröffentlichungstag der Anmeldung: 07.12.2005
(73) Patentinhaber: Meyer, Rudolf, 6373 Ennetbürgen (CH)
(72) Erfinder: Meyer, Rudolf, 6373 Ennetbürgen (CH)
(74) Vertreter: Nückel, Thomas

(56) Entgegenhaltungen:
- DE-A- 4 238 680
- DE-A- 10 201 565
- US-A- 4 057 294
- US-A- 5 294 468

## Beschreibung

### Technisches Gebiet

Die Erfindung betrifft eine Gratleiste für Massivholz sowie ein Verfahren zur Montage der Gratleiste. Die erfindungsgemässe Gratleiste ist vorzugsweise im Möbelbau einsetzbar.

Massive Holzplatten und Massivholz im Allgemeinen neigen dazu, sich zu werfen. Um dies zu vermeiden, wird im Möbelbau bei Massivholz eine sogenannte Gratleiste in eine Gratnut, die quer zur Faserrichtung des Massivholzes verläuft, eingesetzt. In der Regel wird dazu ins Massivholz eine schwalbenschwanzförmige Nut eingefräst und anschließend die Gratleiste, welche im Querschnitt ebenfalls schwalbenschwanzförmig geformt ist, in die Gratnut eingeschoben, so dass eine formschlüssige Schwalbenschwanzverbindung entsteht. Über den Formschluss wird erreicht, dass die Massivholzplatte sich nicht mehr verwirft, aber dennoch in Längsrichtung der Gratleiste arbeiten kann.

### Stand der Technik

Aus dem Stand der Technik DE 42 38 680 A1 ist eine einlegbare und demontierbare Schwalbenschwanz-Gratleistenverbindung für den Gestell- und Möbelbau bekannt. Die in dieser Druckschrift gezeigte Gratleiste besteht aus zwei Keilleisten, die in die schwalbenschwanzförmige Gratnut eingelegt sind. Die beiden Keilleisten sind über eine Doppelschraube gegenüber den Flanken der schwalbenschwanzförmigen Gratnut verspannbar. Die Doppelschraube weist dazu ein links drehendes und ein rechts drehendes Gewinde auf, wobei das Linksgewinde der Doppelschraube in einem in der einen Keilleiste vorgesehenen Linksgewinde und das Rechtsgewinde der Doppelschraube in einem in der zweiten Keilleiste vorgesehenen Rechtsgewinde geführt ist. Durch ein Drehen der Doppelschraube lässt sich nun erreichen, dass die beiden Keilleisten entweder aufeinander zu oder auseinander bewegt werden. Beim Auseinanderbewegen verspannt sich dann die Gratleiste gegenüber der Gratnut. Diese Ausführungsform hat jedoch eine Reihe von Nachteilen. Zum einen sind besonders ausgebildete Doppelschrauben erforderlich, um die beiden Keilleisten auseinander zu drücken. Die beiden Keilleisten müssen zudem in einem fest vorgegebenen Abstand Gewindebohrungen zur Aufnahme der uoppelschrauben aufweisen. Des Weiteren ist bei dieser Ausführungsform von Nachteil, dass für das Werkzeug zum Drehen der Doppelschraube relativ wenig Platz zur Verfügung steht und deshalb das Drehen der Doppelschraube zeitaufwendig ist. Sollte sich nach dem Einsetzen der Gratleiste in die Gratnut herausstellen, dass eine weitere Doppelschraube zum Verspannen erforderlich ist, so muss die gesamte Gratleiste erst wieder entspannt, dann aus der Gratnut herausgenommen, eine weitere Doppelschraube eingesetzt und schließlich die Gratleiste wieder in die Gratnut eingebaut und verspannt werden. Die Montage der Gratleiste ist daher zeitaufwendig.

Aus der Druckschrift DE 102 01 565 A1 ist eine Baueinheit mit einer Holzplatte und einer Gratleiste bekannt, wobei die Gratleiste in eine Nut der Holzplatte eingesetzt ist. Die Gratleiste umfasst ein erstes und ein zweites Halteteil sowie ein dazwischen angeordnetes Druckteil. Die beiden Halteteile sind jeweils mit einem Profilabschnitt versehen, die unter der Kraft des Druckteils an den Seitenwänden der Nut anliegen, wobei die Seitenwände der Nut die beiden Profilabschnitte wenigstens teilweise übergreifen.

### Darstellung der Erfindung

Eine Aufgabe der Erfindung ist es, eine Gratleiste für Massivholz anzugeben, bei der es genügt, wenn die Gratnut im Massivholz lediglich über einen Teil der Breite des Massivholzes verläuft.

Dadurch, dass sich die Gratnut nicht bis zu den Aussenkanten des Massivholzes erstreckt, bleiben die Kanten des Massivholzes unversehrt. Für den Betrachter ist daher die im Massivholz verlaufende Nut in der Regel nicht zu sehen. Der Betrachter kann die Nut nurmehr dann wahrnehmen, wenn er auf die Seite des Massivholzes blickt auf der die Nut verläuft.

Eine weitere Aufgabe der Erfindung besteht darin, die Verspannung zwischen der Gratleiste und der Gratnut an beliebigen Stellen der Gratleiste erzeugen zu können.

Zudem bietet die erfindungsgemäße Gratleiste den Vorteil, dass sie einfach und schnell montiert werden kann, ohne dass es dazu eines speziellen Werkzeugs bedarf.

Die Aufgabe wird durch eine Gratleiste für Massivholz mit den Merkmalen gemäß Patentanspruch 1 gelöst. Die Aufgabe wird zudem durch ein Montageverfahren mit den Merkmalen gemäß Patentanspruch 12 gelöst.

Die erfindungsgemäße Gratleiste für Massivholz weist eine erste und eine zweite Profilleiste sowie eine Schraube auf, welche zwischen zwei als Schraubenführung dienende Außenseiten der beiden Profilleisten schraubbar ist. Die beiden Profilleisten sind derart geformt, dass sie sich durch ein Einschrauben der Schraube mit einer Gratnut, welche im Massivholz eingelassen ist, verspannen.

Die Querschnitte der Schraube und der beiden Profilleisten sind so dimensioniert, dass im eingebauten Zustand die Schraube und die Profilleisten gegenüber der Gratnut verspannt sind.

Bei dem erfindungsgemäßen Montageverfahren zur Montage der Gratleiste im Massivholz werden in einem ersten Schritt die beiden Profilleisten in die Gratnut eingesetzt. In einem nachfolgenden Arbeitsschritt wird die Schraube zwischen die beiden Profilleisten eingedreht.

Vorteilhafte Weiterbildungen der Erfindung ergaben sich aus den in den abhängigen Patentansprüchen angegebenen Merkmalen.

Bei einer ersten Ausführungsform der Erfindung sind die beiden Profilleisten der Gratleiste derart geformt, dass sie mit der Gratnut quer zur Längsrichtung der Gratnut einen Formschluss bilden können.

Der Formschluss kann insbesondere mit Profilleisten erreicht werden, die im Querschnitt konisch geformt sind.

Bei einer weiteren Ausführungsform der Erfindung weisen die Profilleisten zusammen einen schwalbenschwanzförmigen Querschnitt auf. Damit lässt sich auf einfache Art und Weise zwischen der Gratnut und der Gratleiste ein Formschluss erreichen.

Zudem ist es von Vorteil, wenn bei der erfindungsgemaßen Gratleiste die beiden Profilleisten aus Aluminium gefertigt sind. Aluminium hat ein geringes Gewicht, hat eine hohe Biegesteifigkeit und ist einfach weiterverarbeitbar.

Darüber hinaus können die beiden Profilleisten eine Eloxalschicht aufweisen.

Zur Lösung der Aufgabe wird ferner vorgeschlagen, dass die beiden einander zugewandten Außenseiten der Profilleisten geriffelt sind. Die Riffelung erleichtert es, die Schraube zwischen den beiden Profilleisten einzudrehen. Die Riffelung hat zudem den Vorteil, dass sie ein üherwünschtes selbstständiges Ausdrehen der Schraube erschwert.

Die beiden Profilleisten können nach einem weiteren Merkmal der Erfindung einen Hohlraum aufweisen. Dadurch werden die beiden Profilleisten leichter und kostengünsti ger. Zudem können dann die Außenseiten der beiden Profilleisten auf die Schraube wie zwei Federn wirken, wodurch eine gewisse elastische Nachgiebigkeit der gesamten Gradleiste erreichbar ist.

Bei einer Weiterbildung der erfindungsgemäßen Gratleiste ist im Hohlraum der Profilleiste eine Mutter vorgesehen. Dadurch kann an der Profilleiste ein weiteres Profil oder Element befestigt werden, das über eine weitere Schraube mit der im Hohlraum vorgesehenen Mutter verbindbar ist.

In einer weiteren Ausführungsform kann im Hohlraum der Profilleiste ein Versteifungselement vorgesehen sein. Dies ist insbesondere dann von Vorteil, wenn die Steifigkeit der Profilleiste allein nicht ausreicht.

Darüber hinaus können die Profilleisten eine Nut aufweisen, in die ein Profilelement einschiebbar ist. Mit Hilfe der Nuten kann das Profilelement auf einfache Art und Weise passgenau montiert werden. Das Profilelement kann zusatzlich als zusätzliches versteifungselement dienen.

### Kurze Beschreibung der Zeichnungen

Im Folgenden wird die Erfindung mit mehreren Ausführungsbeispielen anhand von 16 Figuren weiter erläutert.
- Figur 1: zeigt, wie die erfindungsgemäße Gratleiste in die Gratnut, die im Massivholz eingelassen ist, eingesetzt wird.
- Figur 2: zeigt die montierte Gratleiste und die Massivholzplatte in einer ersten Montagevariante im Querschnitt.
- Figur 3: zeigt eine zweite Montagevariante der Gratleiste im Querschnitt.
- Figur 4: zeigt die erfindungsgemässe Gratleiste mit zwei Gewindebohrungen im Querschnitt.
- Figur 5: zeigt die erfindungsgemässe Gratleiste mit zwei eingesetzten Muttern im Querschnitt.
- Figur 6: zeigt die erfindunqsqemässe Gratleiste mit zwei eingesetzten Versteifungselementen im Querschnitt.
- Figur 7: zeigt die zweite Montagevariante der Gratleiste mit einem aufgesetzten Vierkantprofil im Querschnitt.
- Figur 8: zeigt die Gratleiste in der zweiten Montagevariante mit einer etwas anders ausgebildeten Vierkantprofilleiste im Querschnitt.
- Figur 9: zeigt die in Figur 7 dargestellte Montagevariante in Verbindung mit einem zusätzlichen Abstandshalter.
- Figur 10: zeigt die erste Montagevariante der Gratleiste mit einem auf der Oberseite der Gratleiste aufgesetzten Verstärkungselement im Querschnitt.
- Figur 11: zeigt die erste Montagevariante der Gratleiste in Verbindung mit einem aufgesetzten Vierkantholz.
- Figur 12: zeigt die zweite Montagevariante der Gratleiste mit einem aufgesetzten Versteifungselement im Querschnitt.
- Figur 13: zeigt in einer dreidimensionalen Ansicht eine mögliche Montagevariante der erfindungsgemäßen Gratleiste.
- Figur 14: zeigt die erfindungsgemäße Gratleiste mit einem an ihr befestigten Spannseil.
- Figur 15: zeigt in der Draufsicht eine mögliche Ausführungsform der montierten Gratleiste in Verbindung mit einem Vierkantprofil.
- Figur 16: zeigt eine zweite Ausführungsform der montierten Gratleiste in Verbindung mit dem montierten Spannseil.

### Wege zur Ausführung der Erfindung

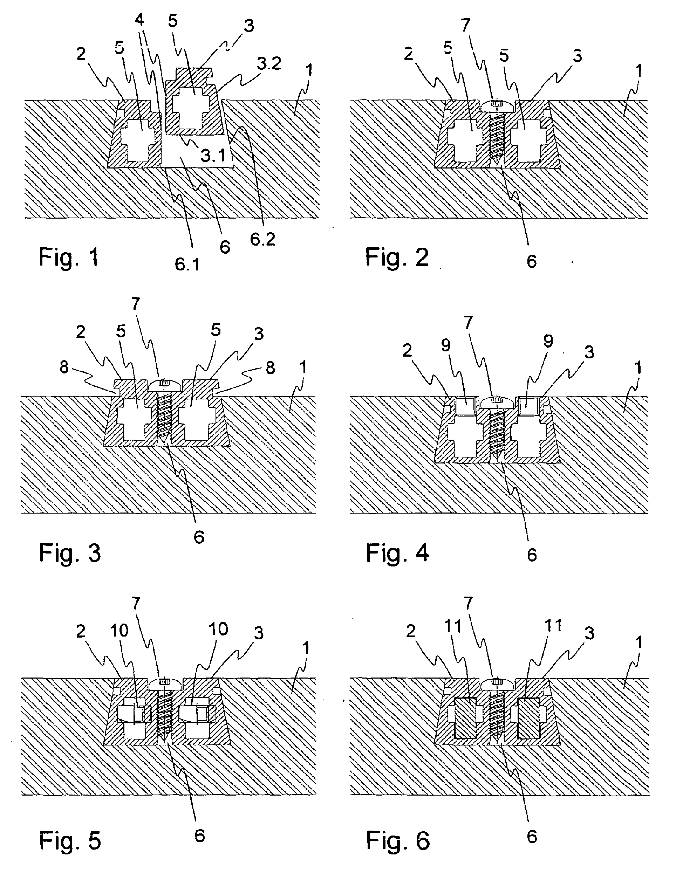

In Figur 1 ist ein Ausschnitt einer Massivholzplatte 1 im Querschnitt dargestellt, wobei die Massivholzplatte 1 eine schwalbenschwanzförmige Gratnut 6 aufweist. In die Gratnut 6 ist eine erste Profilleiste 2 eingelegt. Eine zweite Profilleiste 3 lässt sich über die Öffnung der schwalbensscwanzförmigen Gratnut 6 in die Gratnut 6 einsetzen. Die Profilleiste 3 ist wird so eingesetzt, dass die schräge Außenseite 3.2 der Profilleiste 3 an der Flanke 6.2 der Gratnut 6 und die Grundseite 3.1 der Profilleiste 3 auf dem Gratnutgrund 6.1 zu liegen kommt. Dies gilt sinngemäß auch für die Profilleiste 2. Nachdem die beiden Profilleisten 2 und 3 in die Gratnut 6 eingelegt sind, können die beiden Profilleisten 2 und 3 mit Hilfe einer Schraube 7 gegenüber der Gratnut 6 verspannt werden. Die beiden sich gegenüberliegenden Außenseiten 4 der beiden Profilleisten 2 und 3 können, wie dies in Figur 1 gezeigt ist, geriffelt sein. Die Riffelungen der Außenseiten 4 erleichtern das Einschrauben der Schraube 7. Die Anzahl der verwendeten Schrauben 7 zum Verspannen der beiden Profilleisten 2 und 3 hängt von der Länge der Profilleisten und deren Geometrie ab. Je steifer die Profilleisten ausqebildet sind, desto weniger Schrauben 7 sind erforderlich, um die nötige Spannung zwischen den Profilleisten und der Gratnut zu erreichen. Vorteilhafter Weise sind die Montagepositionen der Schrauben 7 nicht auf einige wenige durch die Gratleiste vorgegebene Stellen beschränkt, sondern können über die gesamte Lange der Profilleisten so verteilt werden, wie es die Situation erfordert.

Grundsätzlich arbeitet eine Massivholzplatte je nach Temperatur- und Feuchtigkeit mehr oder weniger stark, was bei der im Stand der Technik DE 42 38 680 gezeigten Ausführungsform dazu führen kann, dass sich die Doppelschraube durch die dabei entstehenden Kräfte im Laufe der Zeit lockert. Bei der erfindungsgemäßen Lösung hingegen wird dieser Effekt durch mehrere im Folgenden erläuterte Maßnahmen erheblich erschwert bzw. gänzlich vermieden.

Mit Hilfe der Riffelungen der Außenseiten 4 der beiden Profilleisten 2 und 3 wird ein unerwünschtes selbstständiges Ausdrehen der Schraube 7 zu erschwert. Als weitere Maßnahme können die beiden Profilleisten 2 und 3 hohl oder rohrartig ausgeführt sein. Dadurch wird erreicht, dass die sich gegenüberliegenden Außenwände 4, die gleichzeitig als Führung für die Schraube 7 dienen, eine gewisse Federelastizität erhalten. Zudem kann die Schraube 7 vorzugsweise mit einem selbst schneidenden Gewinde versehen sein, welches beim Eindrehen der Schraube 7 zu einer Verformung der Außenwände 4 der Profilleisten 2 und 3 führt. Des weiteren ist es von Vorteil, die Auflagefläche des Schraubenkopfs auf den Oberseiten der beiden Profilleisten 2 und 3 möglichst gross zu machen und die Unterseite des Schraubenkopfs flach, d.h. nicht konisch, auszubilden. Dadurch wird die Reibung zwischen Schraube 7 und den Profilleisten 2 und 3 erhöht. Die genannten Maßnahmen sind in der Regel ausreichend, um ein selbstständiges Ausdrehen der Schraube 7 zu verhindern. Falls gewünscht, kann die Schraube 7 jedoch zusätzlich mittels Klebstoff gegen ein unerwünschtes Ausdrehen gesichert werden.

Die beiden Profilleisten 2 und 3 weisen, wie in den Figuren 1 und 2 zu sehen ist, in ihrem Inneren einen Hohlraum 5 auf. Auf den Zweck und die sich daraus ergebenden Vor-Leile wird im Folgenden weiter eingegangen.

Eine Eloxalschicht auf den Profilleisten 2 und 3 verbessert die Gleitfähigkeit zwischen Holz und Profilleiste 2, 3. Die Eloxalschicht ist eine durch anodische Oxidation aufgebrachte Schicht. Zudem verhindert sie, dass sich das Holz durch Reibung mit den Aluminiumprofilleisten 2 und 3 verfärbt.

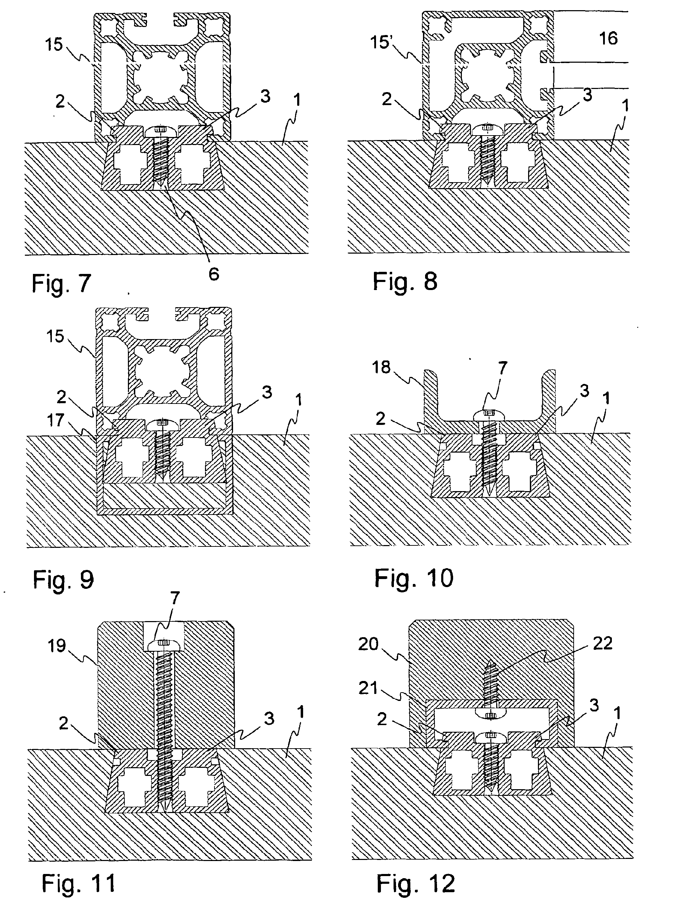

Die in Figur 3 gezeigte zweite Montagevariante der Gratleiste unterscheidet sich von der in Figur 2 gezeigten ersten Montageform der Gratleiste dadurch, dass die Gratnut 6 in Figur 3 nur noch so tief ist, dass die beiden Nuten 8 der beiden Profilleisten 2 und 3 bündig mit der Oberfläche der Massivholzplatte 1 abschließen. Diese Montagevariante ist insbesondere für die in den Figuren 7, 8, 9 und 12 gezeigten Ausführungsformen von Vorteil.

Figur 4 zeigt eine Gratleiste, bei der die beiden Profilleisten 2 und 3 auf ihrer Oberseite jeweils eine Gewindebohrung 9 aufweisen. Über die Gewindebohrungen 9 können weitere Elemente mit den beiden Profilleisten 2 und 3 verschraubt werden.

Statt der Gewindebohrungen 9 können, wie in Figur 5 gezeigt ist, in die Holkammern 5 der beiden Profilleisten 2 und 3 auch Muttern 10 eingelegt werden. In die beiden Profilleisten 2 und 3 können an den gewunschten Stellen von oben Löcher gebohrt und anschließend die Muttern 10 unterhalb der Löcher platziert werden. Dadurch können wie bei der in Figur 4 gezeigten Ausführungsform zusätzliche Montageelemente mit den beiden Profilleisten 2 und 3 verschraubt werden.

Bei der in Figur 6 gezeigten Ausführungsform befinden sich in den Hohlkammern 5 der beiden Profilleisten 2 und 3 Versteifungselemente 11. Diese sind insbesondere dann von Vorteil, wenn die beiden Profilleisten 2 und 3 keine ausreichende Steifigkeit aufweisen. Die Versteifungselemente 11 können beispielsweise aus Eisen, Chromstahl oder auch aus Aluminium bestehen. Sie werden, bevor die beiden Profilleisten 2 und 3 in die Gratnut 6 eingesetzt werden, in die Hohlkammern 5 der Profilleisten 2 und 3 eingeschoben.

Bei der in Figur 7 gezeigten Ausführungsform ist die Gratnut 6 in der Massivholzplatte 1 gerade so tief, dass die beiden Nuten 8 der beiden Profilleisten 2 und 3 mit der Oberfläche der Massivholzplatte 1 bündig abschließen. Nachdem die beiden Profilleisten 2 und 3 mit Hilfe einer oder mehrerer Schrauben 7 gegenüber der Gratnut 6 verspannt wurden, kann ein Vierkantprofil 15 in die beiden Nuten 8 geschoben werden. Anstelle des Vierkantprofils 15 kann auch ein anderes geformtes Profil, beispielsweise ein Dreikantprofil, verwendet werden.

In Figur 8 ist eine zur Figur 7 alternative Ausführungsform des Vierkantprofils 15' gezeigt. Die beiden vierkantprofile 15 und 15' können dazu verwendet werden, um weitere Profile, wie beispielsweise das Profil 16, zu befestigen. Die Vierkantprofile 15, 15' und 16 können als zusätzliche Versteifungselemente dienen. Wird das Vierkantprofil 15 bzw. 15' länger als die Gratnut 6 ausgebildet, so kann mit dem Vierkantprofil 15 bzw. 15' die gesamte Gratnut 6 abgedeckt werden. Dies hat den Vorteil, dass die Gratnut 6 und die Gratleiste für den Betrachter nicht mehr erkennbar sind.

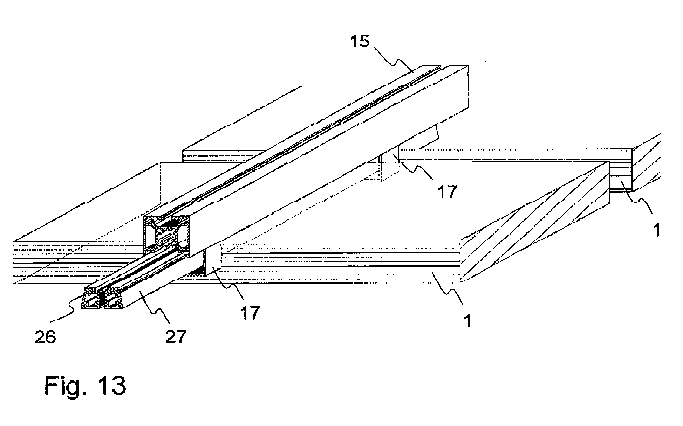

Bei Tischen, deren Tischplatte aus Massivholz besteht und die im Freien aufgestellt werden, kann es wünschenswert sein, die einzelnen Massivholzbretter der Tischplatte mittels einer Fuge voneinander beabstandet auszurichten. In Figur 9 ist ein Ausschnitt der Tischplatte mit Cratleiste im Querschnitt und in Figur 13 eine dreidimensionale Ansicht der Tischplatte mit Gratleiste dargestellt. Die erfindungsgemäße Gratleiste bietet hier einen weiteren Vorteil. Sie dient bei der in den Figuren 9 und 13 dargestellten Ausführungsform zusätzlich als Trägerelement für Abstandshalter 17, die jeweils zwischen zwei Brettern 1 angeordnet sind. Die Abstandshalter 17 sorgen dafür, dass, auch wenn die einzelnen Massivholzbretter 1 arbeiten, ihr Abstand zueinander gleich bleibt. Die Abstandshalter 17 können aus Aluminium oder jedem anderen wetterfesten Werkstoff bestehen.

Insbesondere bei Situationen, bei denen eine außerordentlich hohe Verformungssteifigkeit erforderlich ist, kann die Gratleiste, wie dies in Figur 10 gezeigt ist, mit einem besonders ausgebildeten Versteifungselement 18 versehen sein. Zur Montage ist es lediglich erforderlich, dass nach dem Einsetzen der beiden Profilleisten 2 und 3 in die Gratnut 6 das Versteifungselement 18 gegenüber den beiden Profilleisten 2 und 3 ausgerichtet und anschließend mit diesen mit Hilfe der Schraube / verschraubt wird. Als Versteifungselement 18 kann eine U-förmige Chromstahl- oder Aluminiumschiene verwendet werden.

Alternativ zum Ausführungsbeispiel in Figur 10 kann als Versteifungselement auch ein Kantholz 19 verwendet werden, das über eine entsprechend lange Schraube 7 mit den beiden Profilleisten 2 und 3 verschraubt wird.

Die erfindungsgemäße Gratleiste ermöglicht auch die Verwendung einer Kombination aus Holz und Metall, wie sie wie in Figur 12 gezeigt ist. Hierbei wird in ein Kantholz 20 eine im Querschnitt klammerförmig ausgebildete Profilschiene 21 eingelassen und über eine Schraube 22 mit dem Kantholz 20 verschraubt. Anschließend kann das Kantholz 20 mit Hilfe der Profilschiene 21 in die Nuten der beiden Profilleisten 2 und 3 eingeschoben werden. Dadurch wird eine schraubenlose, unsichtbare Verbindung zwischen Kantholz 20 und Massivholzplatte 1 ermöglicht.

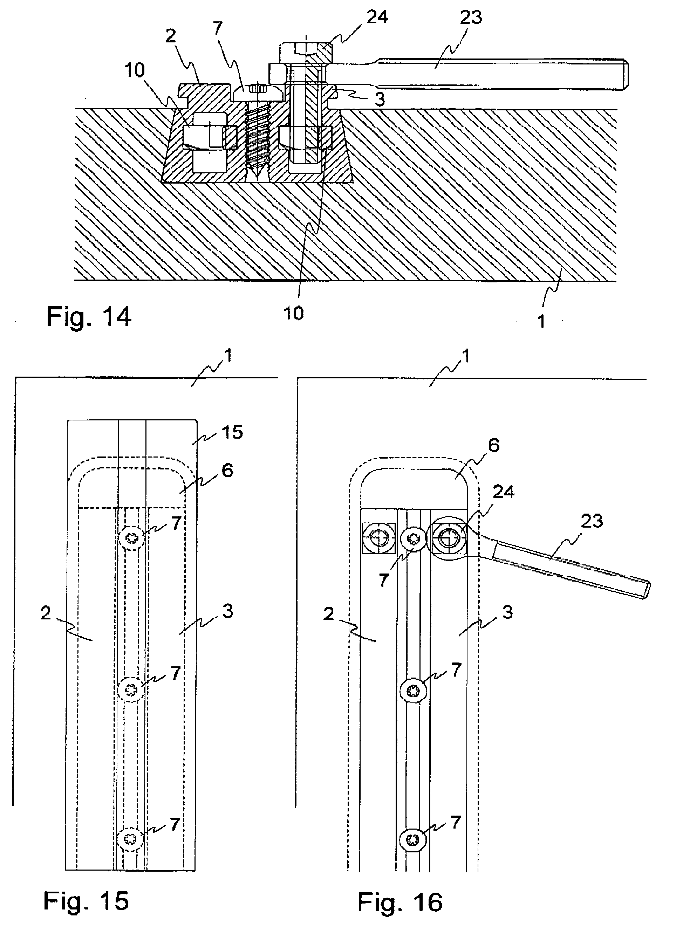

Insbesondere bei großen Tischen kann es erforderlich sein, eine kreuzweise verlaufende zusätzliche Versteifung der Tischplatte vorzusehen. Hierzu können beispielsweise Spannseile verwendet werden. Die Befestigung eines solchen Spannseiles ist in Figur 14 im Querschnitt und in Figur 16 in der Draufsicht gezeigt. Dabei wird das Ende eines Spannseils 23 mittels einer Schraube 24 mit der Profilleiste 3 verschraubt. Als Gegengewinde für die Schraube 24 dient die Mutter 10, die an der entsprechenden Stelle in die Hohlkammer der Profilleiste 3 eingelegt ist.

Es ist nicht zwingend erforderlich, dass die Gratnut 6 einen schwalbenschwanzförmigen Querschnitt aufweist. Es sind auch andere Gratnut-Querschnitte denkbar, wobei dann die Form der Profilleisten 2, 3 an den geänderten Querschnitt der Gratnut angepasst werden muss, um eine formschlüssige Verbindung zwischen Gratnut und Profilleisten zu gewährleisten.

Vorteilhafterweise sind die beiden Profilleisten 2 und 3 symmetrisch ausgebildet. Dadurch wird es möglich, mit einer als Meterware hergestellten Profilleiste, die bedarfsweise auf die gewünschte Länge abgelängt wird, die erfindungsgemäße Gratleiste zu bilden. Ein weiterer Verteil der beschriebenen Profilleisten besteht darin, dass die Profilleisten ohne weiteres aneinandergesetzt werden können und damit beliebig verlängerbar sind.

In einer Ausführungsform der Gratleiste ist die Breite der Gratnut 6 ca. 2/10 mm kleiner bemessen als dies für eine spannungsfreie Montage der beiden Profilleisten nötig wäre. Die 2/10 mm Untermass genügen, um mit Hilfe der Schraube 7 eine ausreichende Verspannung zwischen Gratnut 6 und Profilleisten 2 und 3 zu erreichen.

Wird die Gratnut 6 so tief ausgeführt, dass die beiden Profilleisten 2 und 3 mit der Massivholzplatte 1 bündig abschließen, so hat dies insbesondere bei Tischen mit Auszugsplatten Vorteile, da es bei dieser Montagevariante keine hervorstehenden Bauteile gibt.

Die vorhergehende Beschreibung der Ausführungsbeispiele gemäss der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste

- 1: Massivholz
- 2: erste Profilleiste
- 3: zweite Profilleiste
- 3.1: Unterseite der Profilleiste
- 3.2: schräge Seite der Profilleiste
- 4: Riffelung auf der Aussenseite der Profilleiste
- 5: Hohlraum
- 6: Gratnut
- 6.1: Nutgrund
- 6.2: Nutflanke
- 7: Schraube
- 8: Nut in der Profilleiste
- 9: Bohrung
- 10: Mutter
- 11: Versteifungselement
- 15: Vierkantprofil
- 15': Vierkantprofil
- 16: weiteres Vierkantprofil
- 17: Abstandshalter
- 18: U-Profil
- 19: Vierkantholzleiste
- 20: Vierkantholzleiste
- 21: Vierkantprofil
- 22: weitere Schraube
- 23: Spannseil
- 24: Schraube

## Patentansprüche

1. Gratleiste für Massivholz,
- mit einer ersten und einer zweiten Profilleiste (2, 3),
- mit einer Schraube (7), welche zwischen zwei als Schraubenführung dienende Aussenseiten (4) der beiden Profilleisten (2, 3) schraubbar ist,
- wobei die beiden Profilleisten (2, 3) derart geformt sind, dass sie sich durch ein Einschrauben der Schraube (7) mit einer Gratnut (6), welche im Massivholz (1) eingelassenen ist, verspannen.

2. Gratleiste nach Patentanspruch 1,
bei der die beiden Profilleisten (2, 3) derart geformt sind, dass sie mit der Gratnut (6) quer zur Längsrichtung der Gratnut (6) einen Formschluss bilden können.

3. Gratleiste nach Patentanspruch 2,
bei der die Profilleisten (2, 3) im Querschnitt konisch geformt sind.

4. Gratleiste nach Patentanspruch 1, 2 oder 3,
bei der die Profilleisten (2, 3) zusammen einen schwalbenschwanzförmigen Querschnitt aufweisen.

5. Gratleiste nach einem der Patentansprüche 1 bis 4, bei der die Profilleisten (2, 3) aus Aluminium gefertigt sind.

6. Gratleiste nach Patentanspruch 5,
bei der die Profilleisten (2, 3) eine Eloxalschicht aufweisen.

7. Gratleiste nach einem der Patentansprüche 1 bis 6, bei der die beiden einander zugewandten Aussenseiten (1) der Profilleisten (2, 3) geriffelt sind.

8. Gratleiste nach einem der Patentansprüche 1 bis 7, bei der die Profilleisten (2, 3) einen Hohlraum (5) aufweisen.

9. Gratleiste nach Patentanspruch 8,
bei der im Hohlraum (5) eine Mutter (10) vorgesehen ist.

10. Gratleiste nach Patentanspruch 8 oder 9,
bei der im Hohlraum (5) ein Versteifungselement (11) vorgesehen ist.

11. Gratleiste nach einem der Patentansprüche 1 bis 10, bei der die Profilleisten (2, 3) eine Nut (8) aufweisen, in die ein Profilelement (15, 15', 21) einschiebbar ist.

12. Montageverfahren nach einem der Patentansprüche 1 bis 11,
- bei dem die Profilleisten (2, 3) in die Gratnut (6) eingesetzt werden,
- bei dem die Schraube (7) zwischen die beiden Profilleisten (2, 3) eingedreht wird.

## Claims

1. Sliding dovetail cleat for solid wood,
- with a first and a second profile strip (2, 3),
- with a screw (7) which can be screwed in between two outer sides (4) of both profile strips (2, 3), such outer sides (4) acting as a screw guide,
- whereby both profile strips (2, 3) are shaped in such a way that they are braced by screwing in the screw (7) with a dovetail groove (6) which is embedded in solid wood (1).

2. Sliding dovetail cleat according to claim 1,
wherein both profile strips (2, 3) are configured in such a way that they can create a tight fit with the dovetail groove (6) transverse to the longitudinal direction of the dovetail groove (6).

3. Sliding dovetail cleat according to claim 2,
wherein the profile strips (2, 3) are conically shaped in cross-section.

4. Sliding dovetail cleat according to claim 1, 2 or 3,
wherein the profile strips (2, 3) together have a dovetail shaped cross-section.

5. Sliding dovetail cleat according to one of the claims 1 to 4,
wherein the profile strips (2, 3) are made out of aluminium.

6. Sliding dovetail cleat according to claim 5,
wherein the profile strips (2, 3) have an anodised coating layer.

7. Sliding dovetail cleat according to one of the claims 1 to 6,
wherein both outer sides (4) of the profile strips (2, 3), which are facing toward one another, are fluted.

8. Sliding dovetail cleat according to one of the claims 1 to 7,
wherein the profile strips (2, 3) have a hollow space (5).

9. Sliding dovetail cleat according to claim 8,
wherein a nut (10) is provided in the hollow space (5) .

10. Sliding dovetail cleat according to claim 8 or 9,
wherein a stiffening element (11) is provided in the hollow space (5).

11. Sliding dovetail cleat according to one of the claims 1 to 10,
wherein the profile strips (2, 3) comprise a groove (8) into which a profile element (15, 15', 21) can be slid.

12. An assembly process according to one of the claims 1 to 11,
- wherein the profile strips (2, 3) are placed in the dovetail groove (6),
- wherein the screw (7) is screwed in between both profile strips (2, 3).

## Revendications

1. Languette d'arête de renforcement pour bois massif,
- avec une première et une seconde languette profilée (2, 3),
- avec une vis (7), laquelle est susceptible d'être vissée entre deux côtés extérieurs (4) des deux languettes profilées (2, 3), ces deux côtés extérieurs (4) servant de guidage pour la vis,
- auquel cas les deux languettes profilées (2, 3) sont formées de telle sorte qu'elles se bloquent par un vissage de la vis (7) avec une rainure de renforcement (6), laquelle est encastrée dans le bois massif (1).

2. Languette d'arête de renforcement selon la revendication 1,
dans laquelle les deux languettes profilées (2, 3) sont formées de telle sorte qu'elle peuvent former avec la rainure de renforcement (6), de travers par rapport à la direction longitudinale de la rainure de renforcement (6), une fermeture géométrique.

3. Languette d'arête de renforcement selon la revendication 2,
dans laquelle les languettes profilées (2, 3) sont formées de manière conique en section transversale.

4. Languette d'arête de renforcement selon la revendication 1, 2 ou 3,
dans laquelle les languettes profilées (2, 3) présentent ensemble une section transversale en queue d'aronde.

5. Languette d'arête de renforcement selon une des revendications de 1 à 4,
dans laquelle les languettes profilées (2, 3) sont fabriquées en aluminium.

6. Languette d'arête de renforcement selon la revendication 5,
dans laquelle les languettes profilées (2, 3) présentent une couche anodique.

7. Languette d'arête de renforcement selon une des revendications de 1 à 6,
dans laquelle les deux côtés extérieurs (4) en vis-à-vis des languettes profilées (2, 3) sont cannelés.

8. Languette d'arête de renforcement selon une des revendications de 1 à 7,
dans laquelle les languettes profilées (2, 3) présentent un espace creux (5).

9. Languette d'arête de renforcement selon la revendication 8,
dans laquelle un écrou (10) est prévu dans l'espace creux (5).

10. Languette d'arête de renforcement selon la revendication 8 ou 9,
dans laquelle un élément raidisseur (11) est prévu dans l'espace creux (5).

11. Languette d'arête de renforcement selon une des revendications de 1 à 10,
dans laquelle les languettes profilées (2, 3) présentent une rainure (8), dans laquelle un élément profilé (15, 15', 21) est susceptible d'être inséré.

12. Procédé de montage selon une des revendications de 1 à 11,
- dans lequel les languettes profilées (2, 3) sont insérées dans la rainure de renforcement (6),
- dans lequel la vis (7) est vissée entre les deux languettes profilées (2, 3).
